# EUROPÄISCHE PATENTSCHRIFT

(11) **EP 3 240 143 B1**
(45) Veröffentlichungstag und Bekanntmachung des Hinweises auf die Patenterteilung: **26.07.2023**
(21) Anmeldenummer: 17000681.1
(22) Anmeldetag: 24.04.2017
(51) Int. Cl.: H02K 1/06

(54) **LAMELLENPAKET ZUR HERSTELLUNG VON STATOREN UND/ODER ROTOREN VON ELEKTROMOTOREN UND GENERATOREN**
LAMINATION PACK FOR THE PROCESSING OF STATORS AND/OR ROTORS OF ELECTRIC MOTORS AND GENERATORS
ENSEMBLE DE LAMELLES DESTINÉES À LA FABRICATION DE STATORS ET/OU DE ROTORS DE MOTEURS ÉLECTRIQUES ET DE GÉNÉRATEURS

(30) Priorität: 26.04.2016 DE 102016005329
(43) Veröffentlichungstag der Anmeldung: 01.11.2017
(73) Patentinhaber: Kienle + Spiess GmbH, 74343 Sachsenheim (DE)
(72) Erfinder: Rist, Rudolf, 74343 Sachsenheim (DE); Hertfelder, Marc, 71665 Vaihingen/Enz (DE); Böker, Björn, 73733 Esslingen (DE)
(74) Vertreter: Kohl, Karl-Heinz

(56) Entgegenhaltungen:
- DE-A1-102014 108 696
- DE-C1- 19 839 285
- JP-A- H1 132 458
- JP-A- 2000 050 539
- US-A1- 2008 042 499
- US-A1- 2013 154 434
- US-B2- 6 720 692

## Beschreibung

Die Erfindung betrifft ein Lamellenpaket zur Herstellung von Statoren und/oder Rotoren von Elektromotoren und Generatoren nach dem Oberbegriff des Anspruches 1.

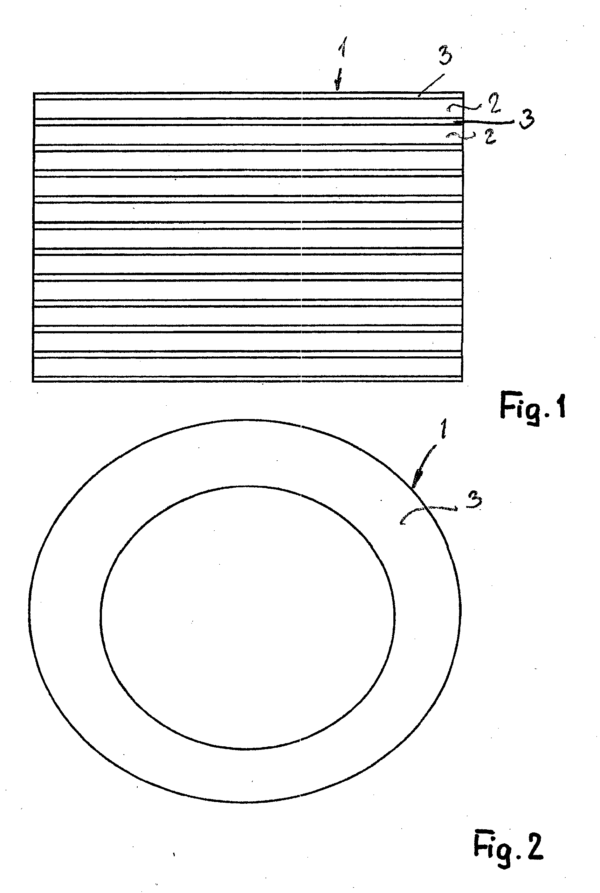

Lamellenpakete 1 werden aus gestanzten Lamellen 2 zusammengesetzt, die aufeinander gestapelt und fest miteinander verbunden werden (Fig. 1 und 2). Das zur Herstellung der Lamellen eingesetzte Elektroblech ist auf mindestens einer Seite mit einer elektrisch isolierenden Beschichtung 3 versehen, die dafür sorgt, dass beim späteren Einsatz im Elektromotor bzw. Generator nur geringe Wirbelstromverluste entstehen. Durch diese elektrisch isolierenden Schichten wird allerdings eine Isolationsprüfung beispielsweise zwischen Kupferwicklung und Lamellenpaket 1 erschwert. Die isolierenden Schichten 3 können in Summe einen verhältnismäßig hohen Widerstandswert, z. B. von 1.000 Ohm, aufweisen. Für eine Isolationsprüfung ist es dagegen sinnvoll, den Gesamtwiderstand auf erheblich kleinere Werte, beispielsweise 10 Ohm, zu reduzieren. Damit dieser geringe Widerstand des Lamellenpaketes 1 erreicht und geprüft werden kann, müssen die Lamellen 2 innerhalb des Lamellenpaketes 1 elektrisch leitend verbunden sein. Hierzu werden die Lamellen 2 innerhalb des Lamellenpaketes 1 miteinander verschweißt, wodurch benachbarte Lamellen 2 innerhalb des Lamellenpaketes 1 elektrisch leitend miteinander verbunden werden. Diese Schweißverbindungen zerstören allerdings die elektrisch isolierenden Schichten 3 im Bereich der Verschweißung. Dies hat zur Folge, dass sich die Wirbelstromverluste entsprechend erhöhen.

Es ist ein Lamellenpaket bekannt (US 6 720 692 B2), bei dem die elektrisch leitende Verbindung zwischen den aufeinander liegenden Lamellen des Lamellenpaketes durch eine elektrisch leitende Schicht gebildet wird, die auf die Isolierschicht der Lamelle beispielsweise aufgesprüht wird. Die elektrisch leitende Schicht ist mit den Innenwänden der Schlitze des Lamellenpaketes in Kontakt, die das Lamellenpaket durchsetzen.

Es ist weiter bekannt (JP 2000 050539 A), zur Herstellung von Lamellenpaketen Klebstoff einzusetzen, der metallische oder keramische Partikel enthält. Dadurch soll eine bessere thermische Leitfähigkeit erreicht werden, so dass die Wärme besser abgeleitet wird.

Bei einem anderen Lamellenpaket (DE 10 2014 108 696 A1) befinden sich zwischen den Lamellen des Lamellenpaketes elektrisch isolierende Schichten in Form von dünnen isolierten Stahlplatten. Die Lamellen sind außerhalb dieser Stahlplatten untereinander durch eine elektrisch leitende Verbindung in Form von geflochtenen Metalllitzen verbunden.

Die US 2013/154434 A1 zeigt ein Lamellenpaket aus aufeinander liegenden Lamellen, die außerhalb der elektrisch isolierenden Schichten untereinander durch eine Schweißverbindung am Statoraußenumfang verbunden sind.

Ein ähnliches Lamellenpaket ist aus JP H11 32458 A bekannt. Die im Lamellenpaket aufeinander liegenden Lamellen sind durch elektrisch isolierende Schichten voneinander getrennt. Außerhalb dieser elektrisch isolierenden Schichten sind die Lamellen untereinander durch eine elektrisch leitende Verbindung verbunden.

Die Erfindung liegt die Aufgabe zugrunde, das gattungsgemäße Lamellenpaket zu Messzwecken, vor oder nach der Wicklung mit Kupferdraht, so auszubilden, dass die Widerstandsprüfung einfach durchgeführt werden kann, ohne eine wesentliche Beeinträchtigung der Wirbelstromverluste im Lamellenpaket zu erhalten.

Diese Aufgabe wird beim gattungsgemäßen Lamellenpaket erfindungsgemäß mit den kennzeichnenden Merkmalen des Anspruches 1 gelöst.

Beim erfindungsgemäßen Lamellenpaket werden die Lamellen durch die elektrisch leitende Verbindung untereinander elektrisch kontaktiert. Sie befindet sich zwischen den Lamellen innerhalb des Lamellenpaketes. Die Lamellen werden durch einen Klebstoff miteinander verbunden, der elektrisch leitende Partikel enthält. Dieser Klebstoff ist so gestaltet, dass beim Zusammendrücken der Lamellen zur Erstellung des Lamellenpaketes die elektrisch leitenden Partikel die Isolationsschichten auf den Lamellen durchdringen. Dadurch wird über die elektrisch leitenden Partikel eine elektrisch leitende Verbindung der Lamellen untereinander innerhalb des Lamellenpaketes erreicht.

Die elektrisch leitende Verbindung sorgt dafür, dass die Widerstandsprüfung des Lamellenpaketes einfach und mit hoher Genauigkeit durchgeführt werden kann. Für die elektrisch leitende Verbindung der Lamellen innerhalb des Lamellenpaketes sind keine das Lamellenpaket durchsetzende Schrauben oder Bolzen erforderlich. Da die Partikel nur sehr geringe Größe haben, bleibt die elektrisch isolierende Schicht zwischen den benachbarten Lamellen weitgehend aufrechterhalten, so dass trotz der Partikeldurchdringung dieser elektrisch isolierenden Schichten das Lamellenpaket nur sehr geringe Wirbelstromverluste aufweist. Die elektrisch leitenden Partikel stellen dabei sicher, dass die aufeinander liegenden Lamellen innerhalb des Lamellenpaketes zuverlässig elektrisch leitend miteinander verbunden sind, so dass eine Widerstandsprüfung einfach durchgeführt werden kann.

Die Lamellen können ringförmig gestanzte Teile sein. Dann besteht das Lamellenpaket aus solchen ringförmigen Stanzteilen, die jeweils durch die elektrisch isolierenden Schichten voneinander getrennt sind.

Die Lamellen müssen nicht einstückig ausgebildet sein, sondern können auch aus aneinandergesetzten gestanzten Einzelzähnen gebildet werden. Solche Einzelzähne haben beispielhaft einen radial verlaufenden Polschaft sowie einen daran anschließenden Polschuh. Über die Stirnseiten der Polschuhe werden die Einzelzähne zur ringförmigen Lamelle zusammengesetzt. Auch bei solchen gestanzten Einzelzähnen sind die Stanzränder frei von der elektrisch isolierenden Schicht, so dass im Lamellenpaket diese gestanzten Ränder der Einzelzähne über die Pakethöhe verlaufende Bereiche aufweisen, an denen die elektrisch leitende Verbindung einfach angebracht werden kann.

Innerhalb des Lamellenpaketes können die Lamellen formschlüssig über Vorsprünge und Vertiefungen fest miteinander verbunden werden. Solche Vorsprünge und Vertiefungen werden dadurch gebildet, dass an den Lamellen örtlich Ausprägungen vorgenommen werden, die die an einer Lamellenseite vorstehenden Vorsprünge und an der anderen Lamellenseite die entsprechenden Vertiefungen aufweisen. Beim Stapeln der Lamellen greifen dann die Lamellen mit ihren Vorsprüngen in die Vertiefungen der jeweils benachbarten Lamellen ein. Auf diese Weise können die Lamellen innerhalb des Lamellenpaketes fest miteinander verbunden werden.

Erfindungsgemäß sind die Lamellen durch ein Klebemittel fest miteinander verbunden. In diesem Falle sind plastische Verformungen der Lamellen nicht erforderlich. Das Klebemittel wird so ausgewählt, dass die Lamellen innerhalb des Lamellenpaketes mit hoher Festigkeit miteinander verbunden sind. Das Klebemittel kann hierbei vollflächig, teilflächig, linienförmig, punktförmig und dergleichen auf die entsprechenden Lamellen aufgebracht werden.

Weitere Merkmale der Erfindung ergeben sich aus den weiteren Ansprüchen, der Beschreibung und den Zeichnungen.

Die Erfindung wird anhand zweier in den Zeichnungen dargestellter Beispiele näher erläutert. Es zeigen
- Fig. 1: eine Seitenansicht eines Lamellenpaketes nach dem Stand der Technik,
- Fig. 2: eine Draufsicht auf das Lamellenpaket gemäß Fig. 1,
- Fig. 3 und 4: in Darstellungen entsprechend den Fig. 1 und 2 ein erstes Beispiel eines nicht erfindungsgemäßen Lamellenpaketes,
- Fig. 5 und 6: in Darstellungen entsprechend den Fig. 1 und 2 ein zweites Beispieleines nicht erfindungsgemäßen Lamellenpaketes.

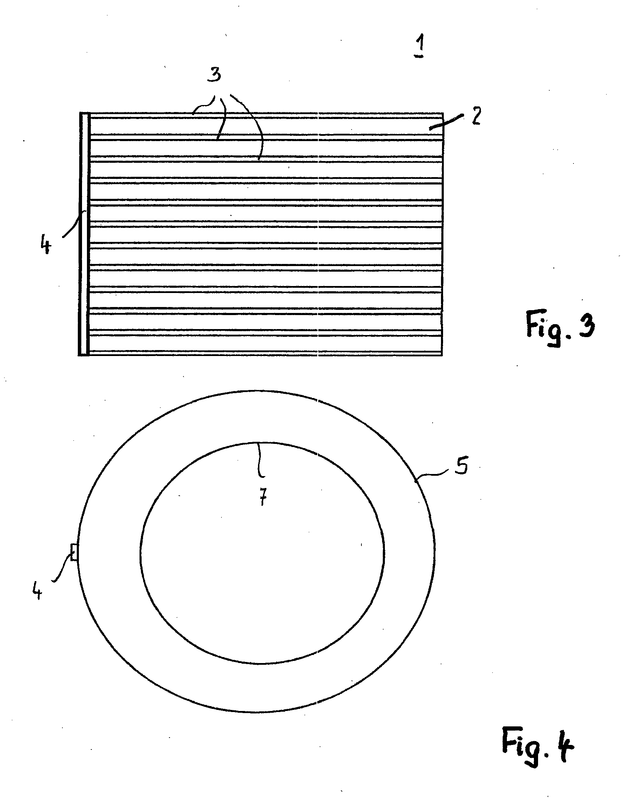

Das Lamellenpaket 1 gemäß den Fig. 3 und 4 besteht aus aufeinander liegenden ringförmigen Lamellen 2, die in bekannter Weise aus einem Blechband gestanzt werden. Die Lamellenpakete 1 werden für Rotoren oder Statoren von Elektromotoren oder Generatoren eingesetzt. Die Lamellen 2 weisen die für den jeweiligen Einsatzfall erforderliche Formgebung auf.

Die Lamellen können auch aus Einzelzähnen zusammengesetzt sein. Solche Einzelzähne haben einen radial verlaufenden, eine Erregerwicklung tragenden Polschaft sowie einen daran anschließenden Polschuh, der gekrümmt verläuft. Die Einzelzähne werden mit ihren Polschuhen aneinander liegend zu einem Ring zusammengesetzt.

Die einzelnen Lamellen 2 sind innerhalb des Lamellenpaketes 1 fest miteinander verbunden. Diese feste Verbindung kann durch Formschluss erreicht werden. In diesem Falle haben die Lamellen 2 über ihre Ebene vorstehende Vorsprünge, die durch entsprechende Teilverformung der Lamellen beim Stanzvorgang gebildet werden. Mit diesen Vorsprüngen greifen die Lamellen in entsprechende Vertiefungen der jeweils benachbarten Lamelle ein. Die über eine Lamellenseite vorstehenden Vorsprünge und die auf der gegenüberliegenden Lamellenseite entsprechenden gebildeten Vertiefungen sind über den Umfang der Lamellen 2 verteilt angeordnet.

Außer dieser formschlüssigen Verbindung ist es auch möglich, die aufeinander liegenden Lamellen 2 beispielsweise an ihrer äußeren Mantelfläche 5 durch Schweißen fest miteinander zu verbinden, beispielsweise durch Laserschweißen oder Reibschweißen. Auch ist es möglich, die Lamellen 2 im Klebeverfahren fest miteinander zu verbinden. Das Klebemittel kann teilflächig, vollflächig oder auch nur punktuell auf die Lamellen 2 aufgetragen sein.

Es ist schließlich auch möglich, die aufeinander liegenden Lamellen 2 sowohl formschlüssig als auch mittels Klebemittel fest miteinander zu verbinden.

Die einzelnen Lamellen 2 sind so miteinander verbunden, dass die elektrische isolierende Schicht 3 auf den Lamellen 2 nicht beschädigt wird, wie es der Fall wäre, wenn die Lamellen von Schrauben oder Bolzen durchsetzt wären, um die Lamellen fest miteinander zu verbinden. Dann müssten die Lamellen 2 Durchtrittöffnungen für die Schrauben/Bolzen aufweisen.

Das Elektroblech, aus dem die Lamellen gestanzt werden, ist mit der elektrischen Isolationsschicht 3 auf beiden Seiten bedeckt. Dadurch wird erreicht, dass der das Lamellenpaket enthaltende Stator bzw. Rotor nur geringe Wirbelstromverluste im Einsatz aufweist.

Um eine Widerstandsprüfung zuverlässig und dennoch einfach durchführen zu können, ohne die Isolationsschichten 3 und damit die elektrische Isolierung der einzelnen Lamellen 2 zu beeinträchtigen, ist bei den Beispielen gemäß den Fig. 3 und 4 vorgesehen, am Umfang des Lamellenpaketes 1 wenigstens eine elektrisch leitende Verbindung 4 vorzusehen, die sich über die Höhe des Lamellenpaketes 1 erstreckt. Im Beispiel verläuft diese elektrisch leitende Verbindung 4 achsparallel, kann aber auch schräg verlaufen.

Für die elektrisch leitende Verbindung kann beispielhaft ein entsprechend leitfähiges Band verwendet werden, das vorzugsweise aus Kupfer oder Aluminium besteht. Das Band ist vorteilhaft ein Klebeband. Ein solches Klebeband lässt sich sehr einfach an der äußeren Mantelfläche 5 des Lamellenpaketes 1 befestigen und bei Bedarf auch wieder abnehmen. Für die Verbindung 4 kann auch ein entsprechend elektrisch leitfähiger Kunststoff oder Lack eingesetzt werden, der sich ebenfalls sehr einfach auf die Mantelfläche 5 über die Höhe des Lamellenpaketes 1 aufbringen lässt.

Im Beispiel hat das Lamellenpaket 1 an der äußeren Mantelfläche 5 nur eine einzige elektrisch leitende Verbindung. Das Lamellenpaket 1 kann aber mindestens eine weitere solche elektrisch leitende Verbindung aufweisen.

Aufgrund des Stanzvorganges befindet sich an der Mantelfläche 5 des Lamellenpaketes 1 keine Isolationsschicht. Sie befindet sich nur an der Ober- und der Unterseite der Lamellen 2. Über die Verbindung 4 sind somit die einzelnen Lamellen 2 innerhalb des Lamellenpaketes 1 elektrisch leitend miteinander verbunden. Dadurch lässt sich eine Widerstandsmessung des Lamellenpaketes 1 sehr einfach und dennoch genau durchführen. Die Verwendung der elektrisch leitenden Verbindung in Form des Klebstoffes oder des Klebebandes hat den Vorteil, dass das Gefüge der einzelnen Lamellen 2 nicht durch die Verbindung 4 beschädigt wird, wie es z. B. bei einem Schweißvorgang der Fall wäre.

Nach der Widerstandsmessung kann die elektrisch leitende Verbindung 4 entfernt werden. Dadurch wird sichergestellt, dass keine Wirbelstromverluste durch am Lamellenpaket 1 verbleibende Verbindungen 4 entstehen.

Es ist sogar möglich, die elektrisch leitende Verbindung 4 am Lamellenpaket 1 zu belassen, da sie die Wirbelstromverluste beim Endprodukt nur wenig beeinflusst. Vorteilhaft ist aber, die elektrisch leitende Verbindung 4 nach dem Messvorgang abzunehmen. Dies ist problemlos möglich, insbesondere wenn für die Verbindung 4 ein Klebeband verwendet wird. Es lässt sich nach dem Messvorgang einfach abziehen.

Wird der Lamellenring aus Einzelzähnen zusammengesetzt, die ihrerseits aus entsprechenden aufeinandersitzenden Einzellamellen bestehen, dann kann die Widerstandsprüfung sowohl am Einzelzahn, der aus den geschichteten und fest miteinander verbundenen Lamellen besteht, als auch am Lamellenpaket durchgeführt werden, das aus den Einzelzähnen zusammengesetzt wird.

Bei Verwendung von Einzelzähnen haben die einzelnen Lamellen den radial verlaufenden Polschaft sowie den Polschuh. Diese Lamellen werden in bekannter Weise aus dem Elektroblech gestanzt, das auf beiden Seiten mit der elektrischen Isolationsschicht 3 versehen ist. Aufgrund des Stanzvorganges befinden sich an den Rändern der zahnförmigen Lamellen keine Isolationsschichten mehr. Werden die Lamellen zum Einzelzahn geschichtet und fest miteinander verbunden, bilden diese von der Isolationsschicht 3 freien Ränder Außenflächen des Einzelzahnes, an denen für die Widerstandsprüfung die elektrisch leitende Verbindung 4 angebracht werden kann. Wird jeder Einzelzahn geprüft, dann kann diese Verbindung 4 grundsätzlich an jeder Außenseite des Einzelzahnes angebracht werden, nicht jedoch an den beiden Außenseiten des Einzelzahnes, die mit der Isolationsschicht 3 versehen sind. Werden die Einzelzähne zunächst zum ringförmigen Lamellenpaket 1 zusammengefügt, dann wird die elektrisch leitende Verbindung 4 an der äu-βeren Mantelfläche 5 des Lamellenpaketes 1 angebracht, wie anhand der Fig. 3 und 4 beschrieben worden ist.

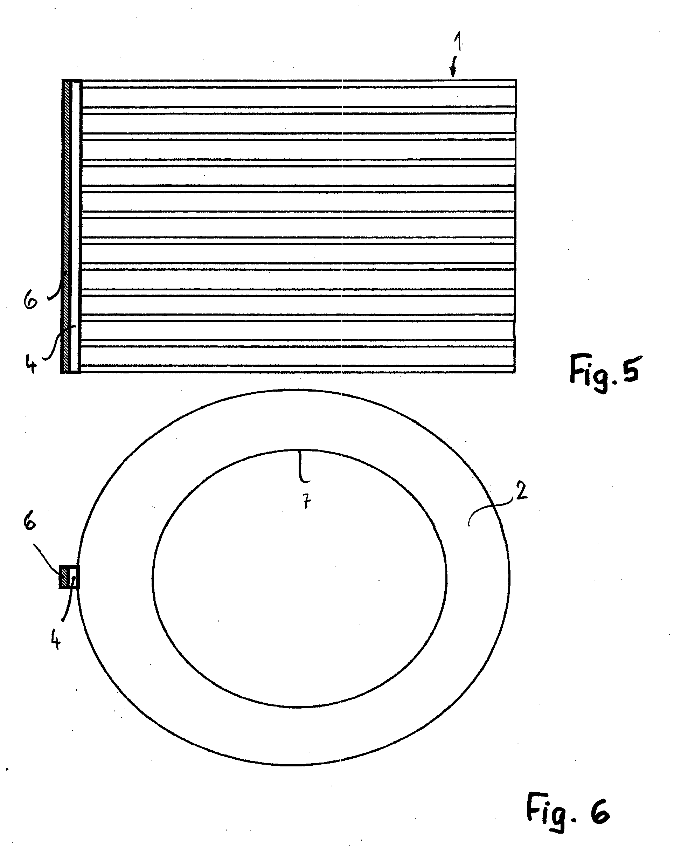

Während bei dem Beispiel nach den Fig. 3 und 4 für die elektrisch leitende Verbindung 4 der elektrisch leitfähige Klebstoff oder elektrisch leitfähige Lack oder das elektrisch leitende Band eingesetzt wird, wird bei dem Beispiel nach den Fig. 5 und 6 in Kombination der elektrisch leitfähige Klebstoff oder Lack und das elektrisch leitfähige Band 6 eingesetzt.

Diese elektrisch leitende Verbindung 4, 6 wird in gleicher Weise am Lamellenpaket 1 angebracht wie bei dem vorigen Beispiel, so dass auf die dortigen Ausführungen verwiesen werden kann. Das Klebeband 6 ist auf dem Klebstoff/Lack 4 angeordnet.

Bei den beiden beschriebenen nicht erfindungsgemäßen Beispielen befindet sich die elektrisch leitende Verbindung, die im Verhältnis zur Umfangslänge des Lamellenpaketes sehr schmal ist, an der äußeren Mantelfläche 5 des Lamellenpaketes 1. Die elektrisch leitende Verbindung 4, 6 kann auch an der inneren Mantelfläche 7 des Lamellenpaketes 1 angebracht werden.

Bei einer erfindungsgemäßen (nicht dargestellten) Ausführungsform der beanspruchten Erfindung befindet sich die elektrisch leitende Verbindung zwischen den Lamellen 2 innerhalb des Lamellenpaketes 1. In diesem Falle werden die Lamellen 2 durch einen Klebstoff miteinander verbunden, der elektrisch leitende Partikel enthält. Dieser Klebstoff ist so gestaltet, dass beim Zusammendrücken der Lamellen 2 zur Erstellung des Lamellenpaketes 1 die elektrisch leitenden Partikel die Isolationsschichten 3 auf den Lamellen 2 durchdringen. Dadurch wird über die elektrisch leitenden Partikel eine elektrisch leitende Verbindung der Lamellen 2 untereinander innerhalb des Lamellenpaketes 1 erreicht.

Da sich die elektrisch leitende Verbindung innerhalb des Lamellenpaketes 1 zwischen benachbarten Lamellen 2 befindet, kann sie nach der Widerstandsmessung nicht entfernt werden. Dies führt zu etwas höheren Wirbelstromverlusten, die aber gering sind, so dass sie für den praktischen Einsatz keine Bedeutung haben. Der die elektrisch leitenden Partikel enthaltende Klebstoff muss nicht über den gesamten Umfang der Lamellen 2 vorgesehen sein. Es reicht aus, dass er nur örtlich auf den Lamellen 2 vorgesehen ist. Er muss nur so aufgetragen werden, dass eine zuverlässige Widerstandsmessung durchgeführt werden kann. Dadurch ist es vorteilhaft möglich, die Wirbelstromverluste aufgrund des im Lamellenpaket 1 verbleibenden elektrisch leitenden Klebstoffes so gering wie möglich zu halten.

Der elektrisch leitende Klebstoff kann nicht nur bei den ringförmigen Lamellen 2 verwendet werden, sondern auch bei den Lamellen, aus denen die Einzelzähne gebildet werden.

## Patentansprüche

1. Lamellenpaket zur Herstellung von Statoren und/oder Rotoren von Elektromotoren und Generatoren, mit aufeinander liegenden und fest miteinander verbundenen Lamellen (2), zwischen denen elektrisch isolierende Schichten (3) vorgesehen und untereinander durch eine elektrisch leitende Verbindung verbunden sind,
**dadurch gekennzeichnet, dass** die elektrisch leitende Verbindung durch ein Klebemittel hergestellt wird, das sich zwischen den Lamellen (2) innerhalb des Lamellenpaketes (1) befindet, und dass die Lamellen (2) durch den Klebstoff miteinander verbunden werden, der elektrisch leitende Partikel aufweist, die im Lamellenpaket (1) die elektrisch isolierende Schicht (3) durchdringen und benachbarte Lamellen (2) damit elektrisch leitend miteinander verbinden.

2. Lamellenpaket nach Anspruch 1,
**dadurch gekennzeichnet, dass** die Lamellen (2) ringförmig gestanzte Teile sind.

3. Lamellenpaket nach Anspruch 1,
**dadurch gekennzeichnet, dass** die Lamellen (2) aus aneinandergesetzten gestanzten Einzelzähnen gebildet sind.

4. Lamellenpaket nach einem der Ansprüche 1 bis 3,
**dadurch gekennzeichnet, dass** die Lamellen (2) über eine Lamellenseite vorstehende Vorsprünge aufweisen, die an der anderen Lamellenseite entsprechende Vertiefungen bilden.

## Claims

1. Lamination pack for the processing of stators and/or rotors of electric motors and generators, with superposed lamellae (2) firmly connected with each other, between which electrically insulating layers (3) are provided and interconnected by an electrically conducting connection,
**characterized in that** the electrically conducting connection is established by an adhesive, which is located between the lamellae (2) inside of the lamination pack (1), and that the lamellae (2) are connected with each other by the adhesive, which has electrically conducting particles that penetrate the electrically insulating layer (3) in the lamella pack (1), and thereby connect adjacent lamellae (2) with each other in an electrically conductive manner.

2. Lamination pack according to claim 1,
**characterized in that** the lamellae (2) are annularly punched parts.

3. Lamination pack according to claim 1,
**characterized in that** the lamellae (2) are comprised of punched individual teeth stacked together.

4. Lamination pack according to one of claims 1 to 3,
**characterized in that** the lamellae (2) have projections that protrude over a lamella side, which form corresponding depressions on the other lamella side.

## Revendications

1. Ensemble de lamelles destinées à la fabrication de stators et/ou de rotors de moteurs électriques et de générateurs, comprenant des lamelles (2) reposant l'une sur l'autre et reliées fixement entre elles, entre lesquelles sont prévues des couches (3) d'isolation électrique, et sont reliées entre elles par une liaison conductrice d'électricité, **caractérisé en ce que** la liaison conductrice d'électricité est produite par un moyen de colle qui se trouve entre les lamelles (2) à l'intérieur de l'ensemble de lamelles (1), et que les lamelles (2) sont reliées entre elles par la colle qui présente des particules conductrices d'électricité qui pénètrent à travers la couche (3) d'isolation électrique dans l'ensemble de lamelles (1) et relient ainsi entre elles des lamelles (2) voisines en conduction d'électricité.

2. Ensemble de lamelles selon la revendication 1,
**caractérisé en ce que** les lamelles (2) sont des pièces embouties annulaires.

3. Ensemble de lamelles selon la revendication 1,
**caractérisé en ce que** les lamelles (2) sont composées de dents individuelles embouties placées l'une contre l'autre.

4. Ensemble de lamelles selon l'une des revendications 1 à 3,
**caractérisé en ce que** les lamelles (2) présentent des saillies dépassant d'un côté des lamelles qui forment des creux correspondants sur l'autre côté des lamelles.
